# NEUE EUROPÄISCHE PATENTSCHRIFT

(11) **EP 0 729 395 B2**
(45) Veröffentlichungstag und Bekanntmachung des Hinweises auf die Entscheidung über den Einspruch: **08.05.2002**
(45) Hinweis auf die Patenterteilung: 07.01.1999
(21) Anmeldenummer: 94924204.4
(22) Anmeldetag: 20.08.1994
(51) Int. Cl.: B23B 27/04, B23C 5/08, B23D 61/06

(54) **HALTER FÜR SPANABHEBENDE WERKZEUG-EINSÄTZE**
HOLDER FOR METAL-CUTTING TOOLS
PORTE-OUTILS D'USINAGE PAR ENLEVEMENT DE COPEAUX

(30) Priorität: 16.11.1993 DE 9317533 U
(43) Veröffentlichungstag der Anmeldung: 04.09.1996
(73) Patentinhaber: Widia GmbH, 45145 Essen (DE)
(72) Erfinder: VON HAAS, Rainer, D-21502 Geesthacht (DE)
(74) Vertreter: Vomberg, Friedhelm, Dipl.-Phys.
(86) Internationale Anmeldenummer: DE9400975
(87) Internationale Veröffentlichungsnummer: WO9513892

(56) Entgegenhaltungen:
- EP-A- 0 152 729
- EP-A- 0 259 846
- FR-A- 2 127 619

## Beschreibung

Die Erfindung betrifft einen Halter mit Aufspreizschlüssel, wobei der Halter für spanabhebende Werkzeugeinsätze (11), insbesondere Stech- oder Schneideinsätze, einen diese halternden gestreckten Klemmschlitz aufweist, dessen gegenüberliegende Backen einen Schlitzbereich bilden, der eine Verbreiterung zu einem Langloch aufweist, in der der Aufspreizschlüssel (16) mit elliptischem oder länglich-ovalem Querschnittsprofil (15) einsteckbar und unter Aufspreizung der gegenüberliegenden Backen verdrehbar ist.

Solche Halter sind beispielsweise aus der DE 39 06 822 C2 oder der EP 0 095 062 B1 bekannt. In der genannten europäischen Patentschrift wird das Aufspreizen des einen Klemmbackens relativ zum anderen, gegenüberliegenden Klemmbacken durch Einlegen und Verdrehen eines elliptischen Schlüssels in dem oval ausgeformten Bereich des Klemmschlitzes bewirkt. Als Nachteil dieser Ausführungsform wird in der DE 39 06 822 C2 angegeben, daß die genaue geometrische Form für den ovalen Schlitzbereich nicht näher spezifiziert sei und mithin bei diesem Haltersystem eine übermäßige Aufspreizung des Klemmschlitzes, bei der die Streckgrenze des Materials überschritten werde, nicht mit Sicherheit zu vermeiden ist. Vielmehr soll zur Vermeidung von dauernden Verformungen, insbesondere der gegenüberliegenden Klemmbacken, mit der Folge, daß eine stabile Klemmung der Werkzeug-Einsätze nicht mehr gewährleistet ist sowie zu Erleichterung des Einsteckens und/oder Verdrehens des Schlüsselbartes ein ovaler Schlitzbereich im Halter vorgesehen sein, der aus zwei je in einer Backe gegenüberliegenden Aussparung gebildet ist, die entsprechend den beiden kleineren Scheitelkrümmungskreisen des elliptischen Querschnittsprofiles verlaufen und voneinander in einem Abstand entfernt sind, der betragsmäßig zwischen den Längen der größeren und der kleineren Ellipsenachse liegt. Nachteiligerweise ist bei dieser Ausführungsform des Halters die Führung des Spreizschlüssels nicht optimal.

Darüber hinaus ist aus der DE-A-30 44 790 ein Auswurfhebel mit einem länglich-runden Ansatzstück bekannt, der in eine kreisförmige Aussparung einsetzbar ist, welche den Klemmspalt nach hinten begrenzt. Auch hier mangelt es an einer optimalen Führung des Auswurfhebels beim Auswerfen des Schneideinsatzes.

Darüber hinaus sind bei Scheibenfräsern Halterungen für Schneideinsätze bekannt, die in einem Klemmschlitz angeordnet sind, der eine rückwärtige, hinter dem eingeklemmten Schneideinsatz liegende Verlängerung aufweist. Zum Auswechseln der Schneideinsätze ist ein Schlüssel vorgesehen, dessen erster Dorn in die genannte Verlängerung greifen soll und dessen zweiter parallel hierzu liegender Dorn an einer radialen Stirnseite der scheibenförmigen Halterung angreift. Der Nachteil dieses Systems besteht in dem notwendigen langen Hebelarm, der zu einer hohen Querkraftbelastung der genannten Dorne und der Gefahr des Verbiegens führt. Darüber hinaus muß eine hohe Spreizkraft aufgewendet werden, welche zur Beschädigung des Halters führen kann. Ein kontrolliertes Lösen der Klemmspannung ist kaum möglich.

Aus der FR-A-2 127 619 ist ein Schneidwerkzeug der eingangs genannten Art bekannt, dessen Halter einen Schlitz mit einem Langloch besitzt, in den ein Schlüssel mit einem elliptischen Schaft einsteckbar ist, dessen kleinerer Durchmesser kleiner und dessen größerer Durchmesser größer als der Abstand der gegenüberliegenden Planflächen des genannten Langloches des Schlitzes sind. Durch Einstecken des Schlüssels in das Langloch und Drehung des elliptischen Schaftes um 90° wird der obere Klemmbacken vom gegenüberliegenden Backen aufgespreizt. Allerdings mangelt es ebenso wie bei den eingangs genannten Haltern an einer optimalen Führung des betreffenden Schaftes des Auswurfhebels, so daß dieser gegen ein Abrutschen im Langloch nicht gesichert ist.

Es ist Aufgabe der vorliegenden Erfindung, einen Halter mit Aufspreizschlüssel der eingangs genannten Art dahin weiterzuentwickeln, daß der Aufspreizschlüssel während des Aufspreizens eine stabile, sichere, abrutschfeste Führung erhält und dennoch leicht handhabbar ist.

Diese Aufgabe wird durch den Halter mit Aufspreizschlüssel nach Anspruch 1 gelöst, der erfindungsgemäß dadurch gekennzeichnet ist, daß das Langloch teilkreisförmige gegenüberliegend angeordnete Erweiterungen aufweist, deren Scheitelpunkte einen Abstand besitzen, der kleiner als der größte Abstand des elliptischen oder länglich-ovalen Qerschnittsprofiles ist und daß die Schnittlinien, an denen die kreisförmigen Erweiterungen jeweils in die Langloch-Schlitzbereiche übergehen, bei eingestecktem und unter Aufspreizung der gegenüberliegenden Backen verdrehtem Aufspreizschlüssel eine 4-Linien Auflage darstellen. Solche Erweiterungen können durch Aufbohren des Langloch-Schlitzbereiches geschaffen werden. Der Vorteil gegenüber länglich-ovalen Erweiterungen mit ebenen oder solchen Grenzflächen, deren Krümmungsradius erheblich größer als der jeweils wirksame Radius des Aufspreizschlüssels ist, besteht in der weitaus besseren Führung des Aufspreizschlüssels. Auch fertigungstechnisch sind solche Erweiterungen leichter herstellbar als ovale oder länglich-runde Erweiterungen.

Weiterbildungen der Erfindung sind in den Unteransprüchen 2 bis 9 beschrieben.

Die Schnittlinien, an denen die kreisförmige Erweiterung jeweils in die angrenzenden Langlochschlitzbereiche übergeht, stellen bei eingestecktem Aufspreizschlüssel die einzigen Anlagen in Form einer 4-Linien-Auflage dar. Dies bewirkt, daß der Aufspreizschlüssel bereits während des Einsteckens hinsichtlich seiner Lage eine eindeutig definierte Stellung erhält. Bei Drehbetätigung wirken die Spreizkräfte infolge der 4-Linien-Auflage gleichmäßig an gegenüberliegenden Flächenstücken.

Der Abstand der Backen des ungespreizten Schlitzbereiches außerhalb der Erweiterungen ist nach einer weiteren Ausgestaltung kleiner als die größere Halbachse aber größer als die kleine Halbachse des elliptischen Querschnittsprofiles oder kleiner als der maximale Abstand zweier gegenüberliegender Grenzpunkte eines länglich-ovalen Querschnittsprofiles.

Vorzugsweise sind die teilkreisförmigen Erweiterungen bezogen auf die Langloch-Längsachse achsenasymmetrisch angeordnet, weiterhin vorzugsweise dergestalt, daß die untere Erweiterung größer ist als die obere.

Nach einer weiteren Ausgestaltung besteht das Querschnittsprofil des Aufspreizschlüssels im wesentlichen aus einem Rechteckprofil, an dessen kurzen Seiten kreissegmentförmige Ausstülpungen angeordnet sind. Diese Dimensionierung sichert eine eindeutige Führung des Aufspreizschlüssels im Bereich der kreisförmigen Erweiterungen. Der Querschnittsprofilmantel ist kantenfrei oder weist nur vier Kanten auf, an denen die kurzen Seiten an die Längsseiten angrenzen. Im Fall der ersten Alternative wird ein durchgehend reibungsloser Übergang während des Aufspreizens gewährleistet, während im zweiten Fall die Bedienungsperson des Aufspreizschlüssels den Übergang der Anlage an der langen Seitenfläche zu der kurzen Seitenfläche des Aufspreizquerschnittes bemerken kann.

Der Radius der kreissegmentförmigen Ausstülpungen der kurzen Seiten des Aufspreizschlüssels ist größer als der Radius der kreisförmigen Erweiterungen des Langloch-Schlitzbereiches. Durch diese Maßnahme kann ein günstiger Kompromiß zwischen optimaler Führung und geringstmöglicher Reibung beim Aufspreizen, d.h. Drehen des Aufspreizschlüssels, geschaffen werden.

In einer weiteren bevorzugten Ausführungsform ist der Abstand der Scheitelpunkte der gegenüberliegenden kreisförmigen Erweiterungen größer als der Durchmesser der kreisförmigen Erweiterungen des Langloch-Schlitzbereiches.

Nach einer weiteren Ausführungsform besitzt einer der Backen einen vorspringenden Anschlag zur Einschubbegrenzung für den Schneideinsatz, wobei die kreisförmigen Erweiterungen zwischen diesem Anschlag und dem Schlitzbereichende, vorzugsweise möglichst nahe am Anschlag liegen. Durch die entsprechend lange Ausgestaltung des Schlitzbereiches kann eine optimale Elastizität der Klemmbacken gewährleistet werden.

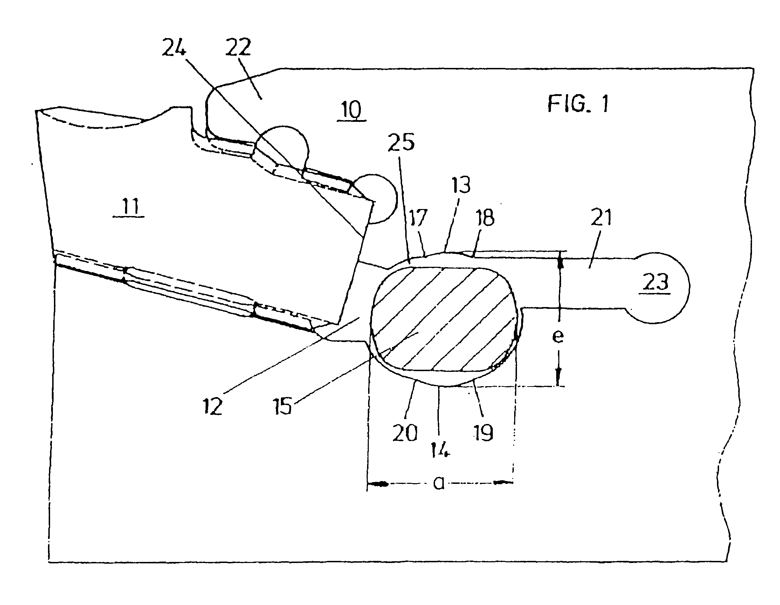

Ein Ausführungsbeispiel der Erfindung ist in den Zeichnungen darstellt. Es zeigen
- Fig. 1: eine Seitenansicht eines Halters mit eingesetztem Schneideinsatz,
- Fig. 2a: einen Steckschlüssel in einer Seitenansicht und

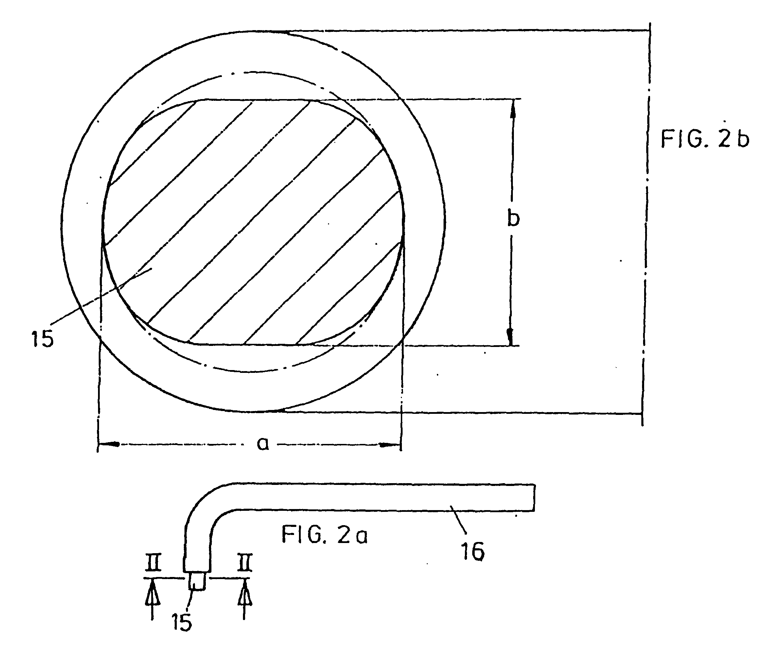

- Fig. 2b: eine Schnittansicht entsprechend der Linie II - II in Fig. 2a.

Der jeweils dargestellte Halter 10 besitzt einen Klemmschlitz zur Halterung eines Schneideinsatzes 11, wobei in der hinteren Klemmschlitzverlängerung 12 im Bereich einer Erweiterung zu einem Langloch 25 teilkreisförmige zueinander und gegenüberliegend angeordnete Erweiterungen 13 und 14 vorgesehen sind, deren Scheitelpunkte einen Abstand e besitzen, der kleiner als der größte Abstand a des elliptischen oder länglich-ovalen Querschnittsprofiles 15 ist. Dieses Querschnittsprofil ist Teil eines Einsteckschlüssels 16 und kann derart lose eingesteckt werden, daß die vier Linien, an denen die kreisförmigen Erweiterungen 13 und 14 jeweils in den Langloch-Schlitzbereich 25 übergehen, die einzigen Berührungslinien 17 bis 20 in Form einer 4-Linien-Auflage darstellen. Durch Drehung des Schlüssels 16 um maximal 90° ist der Klemmarm 22 abspreizbar. Der sich an die Ausnehmung 13 rückwärtig anschließende Schlitzbereich 21 endet in einer kreisförmigen Erweiterung 23.

Der Schlitzbereich 12, 25, 21 ist eine rückseitige Fortsetzung des Klemmschlitzes, in dem der Schneideinsatz 11 eingeklemmt ist. Der obere Klemmbacken 22 besitzt zudem noch als hintere Begrenzung einen Anschlag 24. Die kreisförmigen Erweiterungen 13 und 14 liegen relativ nahe zum Anschlag 24, jedenfalls mit deutlichem Abstand von der kreisartigen hinteren Erweiterung 23 entfernt. Somit steht zum Aufspreizen ein ausreichender Hebelarm zur Verfügung, dessen Länge durch die Abstände der Erweiterungen 13 und 14 von dem Endbereich 23 bestimmt ist.

Eine ausführliche Beschreibung eines derartigen Stecheinsatzes ist im überigen in den Unterlagen der DE-A-42 36 370 beschrieben, auf die hiermit Bezug genommen wird.

## Patentansprüche

1. Halter mit Aufspreizschlüssel, wobei der Halter für spanabhebende Werkzeugeinsätze (11), insbesondere Stech- oder Schneideinsätze, einen diese halternden gestreckten Klemmschlitz aufweist, dessen gegenüberliegende Backen einen Schlitzbereich bilden, der eine Verbreiterung zu einem Langloch aufweist, in der der Aufspreizschlüssel (16) mit elliptischem oder länglich-ovalem Querschnittsprofil (15) einsteckbar und unter Aufspreizung der gegenüberliegenden Backen verdrehbar ist,
**dadurch gekennzeichnet,**
**daß** das Langloch (25) teilkreisförmige gegenüberliegend angeordnete Erweiterungen (13, 14) aufweist, deren Scheitelpunkte einen Abstand (e) besitzen, der kleiner als der größte Abstand (a) des elliptischen oder länglich-ovalen Querschnittsprofiles (15) ist und daß die Schnittlinien (17 bis 20), an denen die kreisförmigen Erweiterungen (13, 14) jeweils in die Langloch-Schlitzbereiche (21,25) übergehen, bei eingestecktem und unter Aufspreizung der gegenüberliegenden Backen verdrehtem Aufspreizschlüssel (15) die einzigen Anlagen in Form einer 4-Linien Auflage darstellen.

2. Halter mit Aufspreizschlüssel nach Anspruch 1, **dadurch gekennzeichnet, daß** der Abstand der Backen des ungespreizten Schlitzbereiches (25) des Halters außerhalb der Erweiterungen (13, 14) kleiner ist als die größere Halbachse (a) aber größer als die kleinere Halbachse (b) des elliptischen Querschnittsprofiles (15) oder kleiner als der maximale Abstand zweier gegenüberliegender Grenzpunkt eines länglich-ovalen Querschnittsprofiles.

3. Halter mit Aufspreizschlüssel nach einem der Ansprüche 1 oder 2, **dadurch gekennzeichnet, daß** die teilkreisförmigen Erweiterungen des Halters bezogen auf die Langloch-Längsachse achsenasymmetrisch angeordnet sind, vorzugsweise dergestalt, daß die untere Erweiterung größer ist als die obere.

4. Halter mit Aufspreizschlüssel nach einem der Ansprüche 1 bis 3, **dadurch gekennzeichnet, daß** das Querschnittsprofil (15) des Aufspreizschlüssels (16) im wesentlichen aus einem Rechteckprofil besteht, an dessen kurzen Seiten kreissegmentförmige Ausstülpungen angeordnet sind.

5. Halter mit Aufspreizschlüssel nach Anspruch 4, **dadurch gekennzeichnet, daß** der Querschnittsprofilmantel kantenfrei ist oder nur vier Kanten aufweist, an denen die kurzen Seiten an die Längsseiten angrenzen.

6. Halter mit Aufspreizschlüssel nach einem der Ansprüche 4 oder 5, **dadurch gekennzeichnet, daß** der Radius der kreissegmentförmigen Ausstülpungen der kurzen Seiten größer als der Radius der kreisförmigen Erweiterungen ist.

7. Halter mit Aufspreizschlüssel nach einem der Ansprüche 1 bis 6, **dadurch gekennzeichnet, daß** der Abstand (e) der Scheitelpunkte der gegenüberliegenden kreisförmigen Erweiterungen (13, 14) des Halters größer ist als der Durchmesser der kreisförmigen Erweiterungen.

8. Halter mit Aufspreizschlüssel nach einem der Ansprüche 1 bis 7, **dadurch gekennzeichnet, daß** die kreisförmigen Erweiterungen (13, 14) des Halters zwischen dem die Schneideinsatzaufnahme rückwärtig begrenzenden Anschlag (24) und dem Schlitzbereichsende (23), vorzugsweise möglichst nah hinter dem Anschlag (24), liegen.

9. Halter mit Aufspreizschlüssel nach einem der Ansprüche 1 bis 8, **dadurch gekennzeichnet, daß** der Schlitzbereich (12, 21) des Halters hinter dem Anschlag (24) und vor dem Langloch (25) breiter ist als hinter dem Langloch (25).

## Claims

1. Holder with expansion key, whereby the holder for chip-removal tool inserts (11), particularly grooving or cutting inserts, has an elongated clamping slot holding the same, the oppositely located jaws of the clamping slot form a slot area which widens to an elongated slot wherein an expansion key (16) with an elliptic or oblong-oval cross section profile (15) can be inserted and turned thereby expanding the opposite jaws,
**characterised in that**
the elongated slot (25) has oppositely located part-circular enlargements (13, 14) whose vertices are at a distance (e) which is smaller than the biggest distance (a) across the elliptic or oblong-oval cross section profile (15) and that the transition lines (17 to 20) where the part-circular enlargements (13, 14) merge into the elongated slot areas (21, 25), are the only contact lines in the form of a 4-line support when the expansion key (15) is inserted and twisted by expansion in the facing slots.

2. Holder with expansion key according to claim 1, **characterised in that** the distance between the jaws in the unexpanded slot area (25) outside the enlargements (13, 14) is smaller than the larger half-axis (a) but bigger than the smaller half-axis (b) of the elliptic cross section profile (15) or smaller than the maximal distance of two opposite limit points of an oblong-oval cross section profile.

3. Holder with expansion key according to one of claims 1 or 2, **characterised in that** the part-circular enlargements are arranged axially symmetric with respect to the longitudinal axis of the elongated slot, preferably in such a manner that the lower enlargement is bigger than the upper one.

4. Holder with expansion according to one of claims 1 to 3, **characterised in that** the cross section profile (15) of the expansion key (16) forms essentially a rectangular profile, on whose short sides protuberances shaped like circular segments are arranged.

5. Holder with expansion key according to claim 4, **characterised in that** the surface of the cross section profile is free of edges or has only four edges where the short sides border on the long sides.

6. Holder with expansion key according to one of the claims 4 or 5, **characterised in that** the radius of the shorter-side circle-segment protuberances is bigger than the radius of the circular enlargements.

7. Holder with expansion key according to one of claims 1 to 6, **characterised in that** the distance (e) of the vertices of the opposite circular enlargements (13, 14) is bigger than the diameter of the circular enlargements.

8. Holder with expansion key according to one of claims 1 to 7, **characterised in that** the circular enlargements (13, 14) lie between the stop (24) rearwards limiting the insertion of the cutting insert and the end (23) of the slot area, preferably as close as possible behind the stop (24).

9. Holder with expansion key,according to one of claims 1 to 8, **characterised in that** the slot area (12, 21) is wider behind the stop (24) and in front of the elongated slot (25) than behind the elongated slot (25).

## Revendications

1. Support avec une clé d'expansion, le support pour des inserts d'outil (11) à enlever des copeaux, en particulier inserts à saigner ou inserts de coupe, présentant une fente allongée de serrage les fixant, dont les mâchoires opposées forment une zone de fente qui présente un élargissement sous forme d'un trou oblong, dans lequel on peut insérer la clé d'expansion (16) ayant un profil de coupe transversale (15) elliptique ou oblong-ovale, et tourner celle-ci en écartant les mâchoires opposées,
**caractérisé par le fait**
**que** le trou oblong (25) présente des élargissements (13, 14) en forme de cercles partiels, qui sont disposés de manière opposée, dont les points culminants possèdent une distance (e) qui est plus petite que la distance la plus grande (a) du profil de coupe transversale (15) elliptique ou oblong-ovale, et que les lignes d'intersection (17 à 20) sur lesquelles les élargissements circulaires (13, 14) débouchent respectivement dans les zones de fente à trou oblong (21, 25) représentent les seuls appuis sous forme d'un support à 4 lignes lorsque la clé d'expansion (15) est insérée et tournée en écartant les mâchoires opposées.

2. Support avec une clé d'expansion selon la revendication 1, **caractérisé par le fait que** la distance des mâchoires de la zone de fente (25) non écartée à l'extérieur des élargissements (13, 14) est plus petite que le demi-axe plus grand (a), mais plus grande que le demi-axe plus petit (b) du profil elliptique de coupe transversale (15) ou plus petite que la distance maximale de deux points limites opposés d'un profil oblong-ovale de coupe transversale.

3. Support avec une clé d'expansion selon l'une des revendications 1 ou 2, **caractérisé par le fait que** les élargissements en forme de cercles partiels, relativement à l'axe longitudinal du trou oblong, sont disposés de manière symétrique par rapport à l'axe, de préférence de telle manière que l'élargissement inférieur est plus grand que l'élargissement supérieur.

4. Support avec une clé d'expansion selon l'une des revendications 1 à 3, **caractérisé par le fait que** le profil de coupe transversale (15) de la clé d'expansion (16) est constitué pour l'essentiel par un profil rectangulaire sur les côtés courts duquel sont disposées des protubérances en forme de segments de cercle.

5. Support avec une clé d'expansion selon la revendication 4, **caractérisé par le fait que** la surface latérale du profil de coupe transversale est exempte d'arêtes ou ne présente que quatre arêtes où les côtés courts confinent aux grands côtés.

6. Support avec une clé d'expansion selon l'une des revendications 4 ou 5, **caractérisé par le fait que** le rayon des protubérances en forme de segments de cercle des côtés courts est plus grand que le rayon des élargissements circulaires.

7. Support avec une clé d'expansion selon l'une des revendications 1 à 6, **caractérisé par le fait que** la distance (e) des points culminants des élargissements circulaires opposés (13, 14) est plus grande que le diamètre des élargissements circulaires.

8. Support avec une clé d'expansion selon l'une des revendications 1 à 7, **caractérisé par le fait que** les élargissements circulaires (13, 14) se trouvent entre la butée (24) limitant à l'arrière le logement de l'insert de coupe, et l'extrémité (23) de la zone de fente, de préférence aussi près que possible derrière la butée (24).

9. Support avec une clé d'expansion selon l'une des revendications 1 à 8, **caractérisé par le fait que** la zone de fente (12, 21) du support présente une largeur plus importante derrière la butée (24) et devant le trou oblong (25) que derrière le trou oblong (25).
